# EUROPÄISCHE PATENTSCHRIFT

(11) **EP 2 243 595 B1**
(45) Veröffentlichungstag und Bekanntmachung des Hinweises auf die Patenterteilung: **29.02.2012**
(21) Anmeldenummer: 10158192.4
(22) Anmeldetag: 29.03.2010
(51) Int. Cl.: B24C 1/04

(54) **Verfahren zum Herstellen eines mit einem Schlitz als Testriss versehenen Körpers**
Process of manufacturing a body with slot as a test crevice
Procédé de la production d'un corps avec une fente comme crevasse de test

(30) Priorität: 22.04.2009 CH 6332009
(43) Veröffentlichungstag der Anmeldung: 27.10.2010
(73) Patentinhaber: Alstom Technology Ltd, 5400 Baden (CH)
(72) Erfinder: Moser, Roland Richard, CH-8005 Zürich (CH); Roth, Philipp, CH-5400 Baden (CH)

(56) Entgegenhaltungen:
- EP-A- 1 378 498
- EP-A- 1 707 315
- WO-A-2007/046143
- US-A- 5 704 824

## Beschreibung

### TECHNISCHES GEBIET

Die vorliegende Erfindung bezieht sich auf das Gebiet Werkstückbearbeitung. Sie betrifft ein Verfahren zum Herstellen eines mit einem Schlitz als Testriss versehenen Körpers, insbesondere Referenzkörpers für die zerstörungsfreie Werkstoffprüfung.

### STAND DER TECHNIK

Für länger in Betrieb befindliche Kraftwerksanlagen haben zerstörungsfreie Inspektionen von zur Rissbildung neigenden, stark belasteten Komponenten eine grosse Bedeutung, um rechtzeitig beginnende Schäden zu erkennen und Gegenmassnahmen zu ergreifen, um insgesamt eine hohe Verfügbarkeit zu gewährleisten. Um die für diese Inspektionen eingesetzten Geräte und Verfahren zur zerstörungsfreien Werkstoffprüfung und Risserkennung, z.B. Ultraschallverfahren, kalibrieren zu können, werden Testkörper mit künstlich erzeugten Riss-artigen Strukturen, d.h. Testrissen, eingesetzt.

Da die natürlich auftretenden Risse sehr schmal sind und typischerweise Breiten im Submillimeterbereich haben, können derartige Testrisse mit herkömmlichen Materialbearbeitungsmethoden wie z.B. Bohren oder Fräsen, nicht erzeugt werden. Als Standardmethode für die künstliche Risserzeugung wird daher bisher das Funkenerosionsverfahren (Electro Discharge Machining oder EDM) eingesetzt. Für kleine Riss-artige Strukturen findet insbesondere das Senkerodierverfahren (sinker EDM) Anwendung, bei dem das zu bearbeitende Werkstück in eine dielektrische Flüssigkeit, wie z. B. Öl, eingetaucht und mit einer Elektrode bearbeitet wird, deren Form der zu erzeugenden Ausnehmung im Werkstück entspricht. Eine Stromversorgung erzeugt eine elektrische Potentialdifferenz zwischen Werkstück und Elektrode. Näher sich die Elektrode dem Werkstück, bricht die Isolation durch die dielektrische Flüssigkeit zusammen und es springt ein Funken zwischen Elektrode und Werkstück über. Die dabei erzeugte Wärme und Kavitation verdampfen lokal das Material des Werkstücks (und zu einem gewissen Teil auch der Elektrode), sodass ein kontinuierlicher Abtragprozess entsteht.

Eine kritische Begrenzung des EDM-Verfahrens besteht jedoch darin dass es nur für elektrisch leitende Materialien anwendbar ist, die meist Eisenlegierungen sind. EDM kann kleine oder ungewöhnlich geformte Winkel, komplizierte Konturen oder Ausnehmungen in gehärteten Stahl schneiden, ohne dass Wärmebehandlungen zum Weichglühen oder erneuten Härten notwendig wären, und es kann auch für exotische Werkstoffe wie Titanium, Hastelloy^{®}, Kovar^{®} und Inconel^{®} eingesetzt werden.

Besonders kritisch ist jedoch hinsichtlich der Erzeugung von Testrissen für die zerstörungsfreie Werkstoffprüfung durch EDM die Einschränkung hinsichtlich der Grösse der Werkstücke. Da die Werkstücke in ein Bad aus einer dielektrische Flüssigkeit eingetaucht werden müssen, können grosse und schwere Strukturen wie z. B. grosse Schmiedestücke oder Rohre, nicht auf diese Weise bearbeitet werden.

Es ist andererseits bekannt, für die Bearbeitung von Werkstücken einen abrasiven Hochdruck-Wasserstrahl (Abrasive Water Jet oder AWJ) einzusetzen, mit dem Schnitte in einem Material, wie z.B. eine Edelstahlblech oderdgl., durchgeführt werden können (siehe die Druckschrift US-A-5,018,317). Ein solcher Wasserstrahl kann auch an unzugänglichen Stellen eingesetzt werden, um Bolzen aus einer Maschinenstruktur zu entfernen (Siehe die Druckschrift WO-A1-2008/083889). Schliesslich ist es möglich (siehe die Druckschrift US-A-5,704,824), mit einer AWJ-Apparatur zunächst eine widerstandsfähige Maske herzustellen und dann durch diese Maske hindurch ein Werkstück abtragend zu bearbeiten.

### DARSTELLUNG DER ERFINDUNG

Es ist eine Aufgabe der Erfindung, ein Verfahren anzugeben, mit dem auf einfache Weise künstliche Risse in Testkörper beliebiger Grösse und Materialbeschaffenheit für die zerstörungsfreie Werkstoffprüfung eingebracht werden können.

Die Aufgabe wird durch die Gesamtheit der Merkmale des Anspruchs 1 gelöst. Die Erfindung geht von dem Gedanken aus, dass durch Anwendung eines rein mechanischen Verfahrens der Testrisserzeugung die durch das Isolierbad bedingte Grössenbegrenzung und die Begrenzung auf elektrisch leitende Werkstoffe wegfallen. Weiterhin geht die Erfindung von der Erkenntnis aus, dass das AWJ-Verfahren als mechanisches Verfahren geeignet ist, die gewünschten extrem feinen Strukturen zu erzeugen, wenn eine entsprechende Maskierung eingesetzt wird und die abrasiven Zuschlagstoffe mit der entsprechenden Korngrösse ausgewählt werden.

Die erfindungsgemässe Lösung zeichnet sich durch die folgenden Schritte aus:
a) Bereitstellen eines Referenzkörpers und einer mit einem Schlitzmuster versehenen Maske;
b) Anbringen der Maske an dem Referenzkörper;
c) Abtragen von Material aus dem Referenzkörper durch die Maske hindurch mittels eines abrasiven Wasserstrahls; und
d) Abnehmen der Maske vom Referenzkörper.

Eine Ausgestaltung des erfindungsgemässen Verfahrens ist dadurch gekennzeichnet, dass eine Maske verwendet wird, die aus einem im Vergleich zum Referenzkörper gegenüber dem abrasiven Wasserstrahl deutlich widerstandsfähigeren Material besteht. Vorzugsweise bestehtdie Maske aus einem Hartmetall, insbesondere Wolframkarbid, oder einer harten Keramik.

Gemäss einer anderen Ausgestaltung ist die Maske als dünne Platte ausgebindet.

Besonders einfach gestaltet sich das erfindungsgemässe Verfahren, wenn die Maske zur Befestigung auf dem Referenzkörper magnetisch oder auf der Unterseite adhäsiv ausgebildet ist.

Eine weitere Ausgestaltung des erfindungsgemässen Verfahrens zeichnet sich dadurch aus, dass für den abrasiven Wasserstrahl eine Mischung aus Wasser und einem feinkörnigen abrasiven Zuschlagstoff verwendet wird. Vorzugsweise wird dabei als Zuschlagstoff eine Oxidkeramik oder ein Granat verwendet.

Insbesondere weist der Zuschlagstoff zur Erzielung feinster Strukturen eine mittlere Korngrösse im Bereich von 1 Mikrometer oder kleiner auf.

Eine andere Ausgestaltung des erfindungsgemässen Verfahrens ist dadurch gekennzeichnet, dass ein abrasiver Wasserstrahl mit einem Düsendurchmesser von 0,5 mm bis 1,0 mm verwendet wird, und dass der Wasserstrahl mit einem Druck von 120 bar bis 200 bar erzeugt wird.

Vorzugsweise weist das Schlitzmuster der Maske eine charakteristische Breite im Submillimeterbereich auf.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Bereitstellen eines Referenzkörper und einer zugehörigen Maske in einem ersten Schritt des Verfahrens gemäss einem Ausführungsbeispiel der Erfindung;
- Fig. 2: das Anbringen der Maske am Referenzkörper in einem zweiten Schritt des Verfahrens gemäss einem Ausführungsbeispiel der Erfindung;
- Fig. 3: das Einbringen eines als Testriss vorgesehenen Schlitzes durch die Maske hindurch mittels AWJ in einem dritten Schritt des Verfahrens gemäss einem Ausführungsbeispiel der Erfindung;
- Fig. 4: der fertig bearbeitete Referenzkörper; und
- Fig. 5: im Vergleich dazu ein Werkstück mit einem Riss.

### WEGE ZUR AUSFÜHRUNG DER ERFINDUNG

Unter einem abrasiven Wasserstrahl (AWJ) wird hier ein Hochdruck-Wasserstrahl für die Materialbearbeitung bzw. -abtragung verstanden, der ein Gemisch aus Wasser und einem abrasiven Zuschlagstoff umfasst, das bei Drücken zwischen 200 und 4000 bar austritt. Der Zuschlagstoff ist vergleichbar mit feinem Sand und umfasst typischerweise Körner aus Oxidkeramik oder Granat mit einem Korndurchmesser unterhalb 0,5 mm. AWJ wird benutzt zum Schneiden, Polieren oder Reinigen von Oberflächen. Der Korndurchmesser des Zuschlagstoffes kann sehr klein sein und bei im Handel erhältlichen Stoffen im Bereich von Mikrometern liegen. Ein derartig feiner Zuschlagstoff wird üblicherweise zum Polieren von optischen Gläsern (Linsen) oder dgl. mit einer Präzision im Mikrometerbereich verwendet.

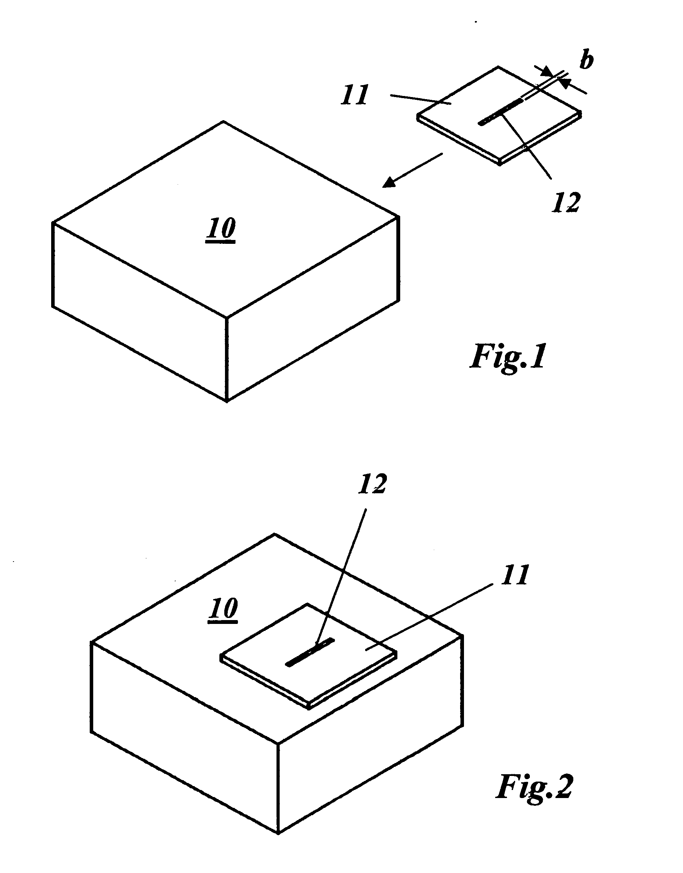

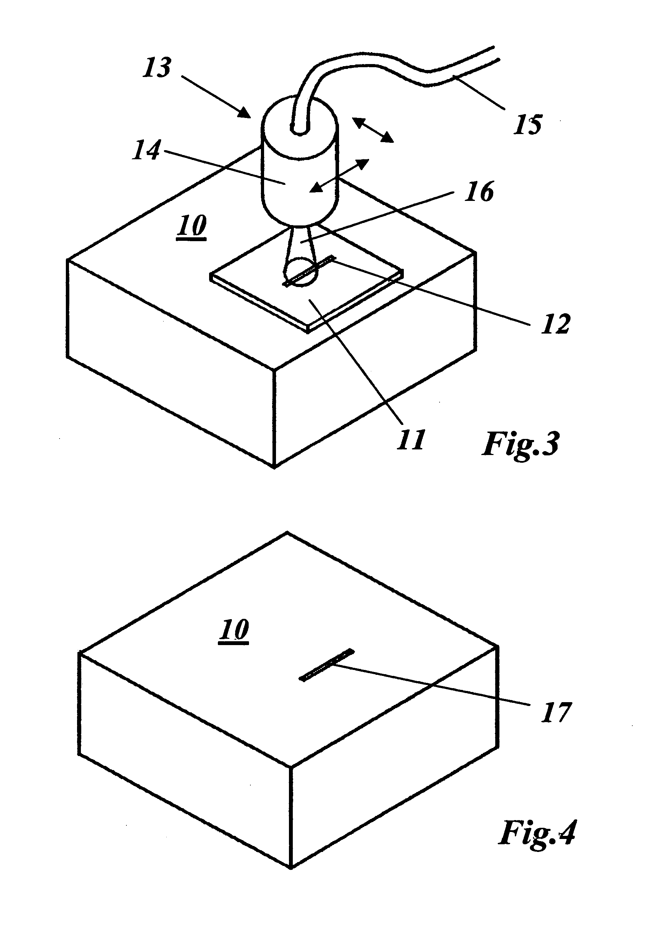

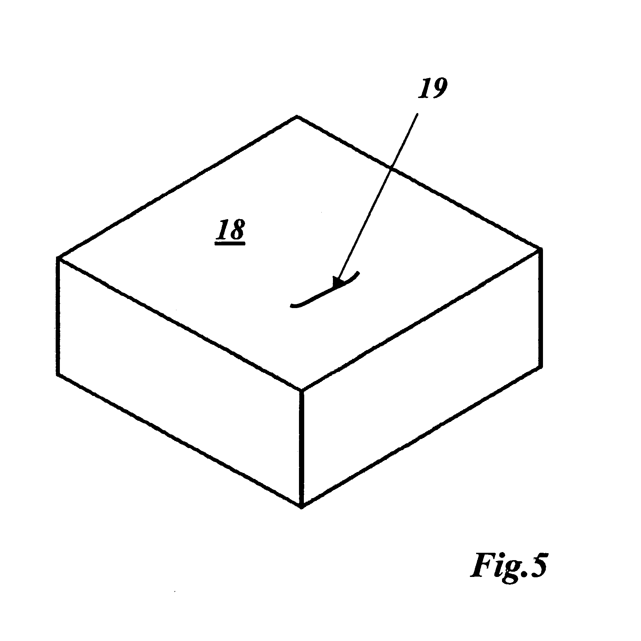

Bei der vorliegenden Erfindung wird ein AWJ dazu verwendet, einen Referenzkörper herzustellen, mit dem für die Kalibrierung eines zerstörungsfreien Prüfverfahrens ein in Fig. 5 dargestelltes Werkstück 18 simuliert werden kann, das einen (natürlichen) Riss 19 aufweist. Das vorgeschlagene Verfahren benutzt einen Wasserstrahl mit einem sehr feinkörnigen Zuschlagstoff. Es geht gemäss Fig. 1 aus von einem geeigneten Referenzkörper 10, der in der Fig. 1 als einfacher Quader dargestellt ist, aber auch die Form eines Rohrstücks, eines Gehäuseteils oder einer anderen in einem Kraftwerk üblichen Komponente haben kann. Für die Bearbeitung des Referenzkörpers 10, d.h. die Einbringung eines als "Testriss" fungierenden Schlitzes (17 in Fig. 4), wird eine Maske 11 in Form einer dünnen Platte bereitgestellt, die mit einem entsprechenden, für den Wasserstrahl durchlässigen Schlitzmuster 12 versehen ist.

Die Maske 11 ist aus einem gegenüber dem Material des Referenzkörpers 10 harten und widerstandsfähigen Material gefertigt, insbesondere aus einem Hartmetall wie Wolframkarbid, oder einer harten Keramik. Das Schlitzmuster 12, durch welches hindurch der abrasive Wasserstrahl das Material des Referenzkörpers 10 abträgt, bestimmt die Form des erzeugten Schlitzes 17. Die charakteristische Breite b des Schlitzmusters 12 liegt im Submillimeterbereich, um die Wirkung eines natürlichen Risses bei der zerstörungsfreien Werkstoffprüfung möglichst genau nachzubilden. Die Tiefe des erzeugten Schlitzes 17 hängt von der Zeitdauer ab, über die der abrasive Wasserstrahl durch die Maske 11 selektiv auf den Referenzkörper 10 einwirkt. Der entstehende Schlitz 17 hat eine Geometrie, die der eines mit dem EDM-Verfahren hergestellten Schlitzes gleicht.

Um den Schlitz 17 zu erzeugen, wird gemäss Fig. 2 die 11 Maske auf dem Referenzkörper 10 an einer dafür vorgesehenen Stelle angeordnet und fixiert. Dies kann auf magnetischem Wege geschehen, wenn die Maske 11 magnetisch ist und der Referenzkörper 10 aus einem magnetisierbaren Material besteht. die Maske kann aber auch auf der Unterseite mit einer adhäsiven Schicht versehen sein, welche die Maske 11 auf der Oberfläche des Referenzkörper 10 festhält. Ist die Maske 11 platziert, wird mit einer Wasserstrahlapparatur 13, deren detaillierter Aufbau hier nicht gezeigt ist, aber aus den eingangs genannten Druckschriften entnommen werden kann, ein abrasive Zuschlagstoffe in Suspension enthaltender Wasserstrahl 16 so auf die Maske 11 gerichtet, dass ein dem Schlitzmuster 12 der Maske 11 entsprechender Bereich des Referenzkörper 10 abgetragen und zu einem Schlitz 17 vertieft wird. Dazu wird - wenn der Durchmesser des auftreffenden Wasserstrahls 16 kleiner ist, als die lateralen Abmessungen des Schlitzmusters 12 - der den Wasserstrahl 16 erzeugende Strahlkopf 14, der über einen Versorgungsschlauch 15 mit der abrasiven Suspension versorgt wird, in vorbestimmter Weise über den Bereich des Schlitzmusters 12 geführt, wie dies in Fig. 3 durch die Doppelpfeile angedeutet ist.

Die physikalischen Parameter des Prozesses wie Druck, Korngrösse, Temperatur oder Düsengeometrie können hinsichtlich der gewünschten Schlitzgeometrie, Schlitztiefe und Oberflächenqualität angepasst werden. Ein Druck von 120 bar bis 200 bar, ein Düsendurchmesser für den Wasserstrahl von 0,5 mm bis 1,0 mm und ein mittlerer Korndurchmesser von 1 Mikrometer oder darunter haben sich in der Praxis bewährt. Mit einer selbsthaftenden Maske und einer mobilen Schneidapparatur, wie sie in der eingangs genannten Druckschrift WO-A1-2008/083889 gezeigt ist, können auch schwer zugängliche Stellen an einem Referenzkörper bearbeitet oder sogar direkt an einem Anlagenteil Testrisse erzeugt werden.

Nach einer vorgegebenen Bearbeitungszeit wird die Wasserstrahlapparatur 13 abgestellt und entfernt. Nach dem Abnehmen der Maske 11 verbleibt ein Referenzkörper 10, der an der vorgegebenen Stelle einen definierten Schlitz 17 als Testriss aufweist (Fig. 4).

Es versteht sich von selbst, dass aufgrund der Flexibilität des Verfahrens auch direkt Komponenten der Kraftwerksanlage vor oder nach dem Einbau mit entsprechenden Schlitzen bzw. Schlitzmustern versehen werden können.

### BEZUGSZEICHENLISTE

- 10: Referenzkörper
- 11: Maske
- 12: Schlitzmuster
- 13: Wasserstrahlapparatur (abrasiv)
- 14: Strahlkopf
- 15: Versorgungsschlauch
- 16: Wasserstrahl
- 17: Schlitz (Testriss)
- 18: Werkstück
- 19: Riss

## Patentansprüche

1. Verfahren zum Herstellen eines mit einem Schlitz (17) als Testriss versehenen Referenzkörpers (10) für die zerstörungsfreie Werkstoffprüfung, **gekennzeichnet durch** folgende Schritte:
a) Bereitstellen eines Referenzkörpers (10) und einer mit einem Schlitzmuster (12) versehenen Maske (11);
b) Anbringen der Maske (11) an dem Referenzkörper (10);
c) Abtragen von Material aus dem Referenzkörper (10) **durch** die Maske (11) hindurch mittels eines abrasiven Wasserstrahls (16); und
d) Abnehmen der Maske (11) vom Referenzkörper (10).

2. Verfahren nach Anspruch 1, **dadurch gekennzeichnet, dass** eine Maske (11) verwendet wird, die aus einem im Vergleich zum Referenzkörper gegenüber dem abrasiven Wasserstrahl (16) deutlich widerstandsfähigeren Material besteht.

3. Verfahren nach Anspruch 2, **dadurch gekennzeichnet, dass** die Maske (11) aus einem Hartmetall, insbesondere Wolframkarbid, oder einer harten Keramik, besteht.

4. Verfahren nach einem der Ansprüche 1 bis 3, **dadurch gekennzeichnet, dass** die Maske (11) als dünne Platte ausgebildet ist.

5. Verfahren nach einem der Ansprüche 1 bis 4, **dadurch gekennzeichnet, dass** die Maske (11) zur Befestigung auf dem Referenzkörper (10) magnetisch oder auf der Unterseite adhäsiv ausgebildet ist.

6. Verfahren nach einem der Ansprüche 1 bis 5, **dadurch gekennzeichnet, dass** für den abrasiven Wasserstrahl (16) eine Mischung aus Wasser und einem feinkörnigen abrasiven Zuschlagstoff verwendet wird.

7. Verfahren nach Anspruch 6, **dadurch gekennzeichnet, dass** als Zuschlagstoff eine Oxidkeramik oder ein Granat verwendet wird.

8. Verfahren nach Anspruch 6 oder 7, **dadurch gekennzeichnet, dass** der Zuschlagstoff eine mittlere Korngrösse im Bereich von 1 Mikrometer oder kleiner aufweist.

9. Verfahren nach einem der Ansprüche 1 bis 8, **dadurch gekennzeichnet, dass** ein abrasiver Wasserstrahl (16) mit einem Düsendurchmesser von 0,5 mm bis 1,0 mm verwendet wird, und dass der Wasserstrahl (16) mit einem Druck von 120 bar bis 200 bar erzeugt wird.

10. Verfahren nach einem der Ansprüche 1 bis 9, **dadurch gekennzeichnet, dass** das Schlitzmuster (12) der Maske (11) eine charakteristische Breite (b) im Submillimeterbereich aufweist.

## Claims

1. Process for producing a reference body (10) provided with a slot (17) as a test crack for the nondestructive testing of materials, **characterized by** the following steps:
a) a reference body (10) and a mask (11) provided with a slot pattern (12) are provided;
b) the mask (11) is applied to the reference body (10) ;
c) material is removed from the reference body (10) through the mask (11) by means of an abrasive water jet (16); and
d) the mask (11) is taken off the reference body (10).

2. Process according to Claim 1, **characterized in that** use is made of a mask (11) consisting of a material which is considerably more resistant to the abrasive water jet (16) than the reference body.

3. Process according to Claim 2, **characterized in that** the mask (11) consists of a hard metal, in particular tungsten carbide, or a hard ceramic.

4. Process according to one of Claims 1 to 3, **characterized in that** the mask (11) is in the form of a thin plate.

5. Process according to one of Claims 1 to 4, **characterized in that** the mask (11) is magnetic or, on the underside, adhesive so that it can be fastened on the reference body (10).

6. Process according to one of Claims 1 to 5, **characterized in that** a mixture of water and a fine-grain abrasive additive is used for the abrasive water jet (16).

7. Process according to Claim 6, **characterized in that** the additive used is an oxide ceramic or a garnet.

8. Process according to Claim 6 or 7, **characterized in that** the mean grain size of the additive is in the region of 1 micrometer or less.

9. Process according to one of Claims 1 to 8, **characterized in that** an abrasive water jet (16) having a nozzle diameter of 0.5 mm to 1.0 mm is used, and **in that** the water jet (16) is produced with a pressure of 120 bar to 200 bar.

10. Process according to one of Claims 1 to 9, **characterized in that** the slot pattern (12) of the mask (11) has a characteristic width (b) in the submillimeter range.

## Revendications

1. Procédé de fabrication d'un corps de référence (10) muni d'une fente (17) comme crevasse de test pour l'examen non destructif de matériaux, **caractérisé par** les étapes suivantes:
a) préparation d'un corps de référence (10) et d'un masque (11) muni d'un motif de fente (12);
b) placement du masque (11) sur le corps de référence (10) ;
c) enlèvement de matière du corps de référence (10) à travers le masque (11) au moyen d'un jet d'eau abrasif (16); et
d) retrait du masque (11) du corps de référence (10).

2. Procédé selon la revendication 1, **caractérisé en ce que** l'on utilise un masque (11), qui se compose d'un matériau nettement plus résistant au jet d'eau abrasif (16) par comparaison avec le corps de référence.

3. Procédé selon la revendication 2, **caractérisé en ce que** le masque (11) se compose d'un métal dur, en particulier de carbure de tungstène, ou d'une céramique dure.

4. Procédé selon l'une quelconque des revendications 1 à 3, **caractérisé en ce que** le masque (11) est formé par une plaque mince.

5. Procédé selon l'une quelconque des revendications 1 à 4, **caractérisé en ce que** le masque (11) est magnétique ou adhésif sur sa face inférieure pour sa fixation sur le corps de référence (10).

6. Procédé selon l'une quelconque des revendications 1 à 5, **caractérisé en ce que** l'on utilise pour le jet d'eau abrasif (16) un mélange d'eau et d'un matériau d'addition abrasif en grains fins.

7. Procédé selon la revendication 6, **caractérisé en ce que** l'on utilise comme matériau d'addition une céramique oxydée ou un grenat.

8. Procédé selon la revendication 6 ou 7, **caractérisé en ce que** le matériau d'addition présente une granulométrie moyenne de l'ordre de 1 micromètre ou moins.

9. Procédé selon l'une quelconque des revendications 1 à 8, **caractérisé en ce que** l'on utilise un jet d'eau abrasif (16) avec un diamètre de buse de 0,5 mm à 1,0 mm, et **en ce que** l'on produit le jet d'eau (16) avec une pression de 120 bar à 200 bar.

10. Procédé selon l'une quelconque des revendications 1 à 9, **caractérisé en ce que** le motif de fente (12) du masque (11) présente une largeur caractéristique (b) dans le domaine sous-millimétrique.
